# EUROPÄISCHE PATENTANMELDUNG

(11) **EP 0 591 860 A2**
(43) Veröffentlichungstag der Anmeldung: **13.04.1994**
(21) Anmeldenummer: 93115893.5
(22) Anmeldetag: 01.10.1993
(51) Int. Cl.: A01K 85/16

(54) **Köder zum Fischen sowie Verfahren zu seiner Herstellung**

(30) Priorität: 02.10.1992 DE 4233158; 31.10.1992 DE 4236848
(71) Anmelder: Leitner, Wilhelm, D-89284 Pfaffenhofen (DE)
(72) Erfinder: Leitner, Wilhelm, D-89284 Pfaffenhofen (DE)
(74) Vertreter: Graf, Helmut, Dipl.-Ing.

(57) **Zusammenfassung**

Die Erfindung bezieht sich auf eine neuartige Ausbildung eines Köders zum Fischen, hergestellt als Formkörper aus Kunststoff.

## Beschreibung

Die Erfindung bezieht sich auf einen Köder zum Fischen gemäß Oberbegriff Patentanspruch 1 sowie auf ein Verfahren zum Herstellen eines solchen Köders gemäß Oberbegriff Patentanspruch 8.

Es ist bekannt, beim Fischen bzw. beim Angeln von Raubfischen künstliche Köder einzusetzen. Insbesondere ist es hierbei auch bekannt, Köder zu verwenden, die aus PVC hergestellt sind, und zwar mit einem sehr hohen Anteil an Weichmacher. Typischerweise beträgt der Anteil an PVC etwa 25 - 30 %, wobei der Rest Weichmacher ist, um für den jeweiligen, künstlichen Köder die angestrebten elastischen bzw. weichen Eigenschaften zu erhalten. Der hohe Anteil an Weichmacher ist aber bei diesen bekannten Ködern auch zur Reduzierung des spezifischen Gewichtes notwendig, welches aber dennoch deutlich über 1,0 liegt.

Nachteilig ist bei diesen bekannten Ködern aus Kunststoff, daß der jeweilige Weichmacher stark migriert, d.h. dazu neigt, aus dem Produkt auszutreten, was zu einer nicht unerheblichen Belastung von Gewässern führt. Durch das (trotz des hohen Anteils an Weichmacher) hohe spezifische Gewicht neigen die bekannten Köder aus Kunststoff weiterhin auch dazu, nach dem Auswerfen mit dem Angelhaken sehr schnell und untypisch abzusinken, was das Fangergebnis stark beeinträchtigen kann.

Aufgabe der Erfindung ist es, einen Köder bzw. ein Verfahren zum Herstellen eines Köders aufzuzeigen, der die vorgenannten Nachteile vermeidet.

Zur Lösung dieser Aufgabe ist ein Köder entsprechend dem kennzeichnenden Teil des Patentanspruches 1 bzw. ein Verfahren entsprechend dem kennzeichnenden Teil des Patentanspruches 8 ausgebildet.

Der verwendete Kunststoff für den Köder ist erfindungsgemäß ein weiches, thermoplastisches Elastomer. Derartige Elastomere benötigen keine Weichmacher und sind größtenteils sogar medizintauglich und recyclebar, so daß Umweltbelastungen, wie sie durch die bisher verwendeten Köder aus Kunststoff auftreten, wirksam vermieden sind.

Ein wesentlicher Vorteil besteht aber auch in dem relativ geringen spezifischen Gewicht, welches deutlich unter 1,0 liegt und nötigenfalls bis zu 0,6 einstellbar ist. Hierdurch wird für den an einem Angelhaken befestigten Köder ein natürliches Schwimmverhalten im Wasser erreicht, und zwar mit dem Ergebnis einer verbesserten Fangquote.

Bei einer bevorzugten Ausführungsform ist die Außenhaut bzw. Außenfläche des Köders von einem Zuschnitt einer Kunststoffolie gebildet, die mit der notwendigen Struktur und/oder Farbgebung versehen, bevorzugt vorbedruckt ist. Hiermit ist es möglich, trotz der sehr weichen Ausbildung des Köders diesen möglichst naturgetreu zu gestalten, was wegen der Verwendung des thermoplastischen Elastomers durch ein direktes Bedrucken des fertiggestellten Köders nicht oder nicht ohne weiteres möglich ist.

Grundsätzlich ist es möglich, den Köder bzw. dessen Körper und/oder die vorstehend erwähnte Folie mit Geruchs- und/oder Geschmacksstoffen zu impfen bzw. dort entsprechende Geruchs-bzw. Geschmacksstoffe zum Anlocken von Fischen beizufügen. Dies ist speziell auch deswegen besonders erfolgreich möglich, weil bei dem Köder nach der Erfindung austretende Weichmacher völlig fehlen.

Weiterbildungen der Erfindung sind Gegenstand der Unteransprüche.

Die Erfindung wird im folgenden anhand der Figuren an einem Ausführungsbeispiel näher erläutert. Es zeigen:
- Fig. 1: in schematischer Darstellung und in Seitenansicht einen als Fisch geformten bzw. gestalteten Köder zum Fischen gemäß der Erfindung;
- Fig. 2: einen Schnitt entsprechend der Linie I-I der Fig. 1;
- Fig. 3: in ähnlicher Darstellung wie Fig. 1 eine weitere Ausführungsform des erfindungsgemäßen Köders,
- Fig. 4 - 6: jeweils in Seitenansicht (Position a) bzw. in Draufsicht von vorne (Position b) verschiedene, aus einem härterem Material hergestellte Schaufeln zu Verwendung bei einem Köder nach Fig. 3.

Der in den Figuren dargestellte Köder besteht aus einem aus einem thermoplastischen Elastomer im Spritzverfahren und als Fisch geformten bzw. gestalteten Körper 1. Die Oberfläche des Körpers 1 ist zumindest über ihren größten Teilbereich von einem Zuschnitt einer dünnen Kunststoffolie 2 überzogen, die die für das natürliche Aussehen des Köders erforderliche optische, d.h. insbesondere graphische und/oder farbliche Strukturierung aufweist. Die Folie 2 besteht aus einem Material, vorzugsweise ebenfalls aus einem thermoplastischen Elastomer (TPE), welches mit dem Material des Körpers 1 eine innige Verbindung eingeht. Die Folie ist mit der jeweiligen Strukturierung vorbedruckt und wird in einem sogenannten "Inmold"-Verfahren verarbeitet, d.h. der vorbedruckte Folienzuschnitt wird in den Formraum der zum Herstellen des Köders verwendeten Spritzgußform eingelegt. Die anschließend in diesen Formraum unter Druck einströmende Kunststoffmasse drückt den Folienzuschnitt so stark gegen die Innenfläche des Formraumes, daß ein fester Verbund zwischen der Folie 2 und dem thermoplastischen Elastomer des Körpers 1 zustandekommt und außerdem die Folie 2 eine glatte Außenfläche für den Köder bildet.

Dem Körper 1 bzw. dem diesen Körper bildenden Elastomer können beispielsweise Geruchs- und Geschmacksstoffe beigefügt sein, die bei Fischen auf die Fische einen zusätzlichen Reiz ausüben. Weiterhin ist es auch möglich, diese Geruchs-und/oder Geschmacksstoffe in und/oder an der Folie 2 vorzusehen, mit dem Vorteil einer wesentlich schonenderen Behandlung dieser in der Regel flüchtigen Stoffe beim Formen sowie auch mit dem Vorteil, daß bereits mit einem relativ geringen Anteil an solchen Geruchs- und/oder Geschmacksstoffen eine große Wirkung erreicht wird.

Die Verwendung der Folie 2 bzw. des Folienzuschnittes hat den grundsätzlichen Vorteil, daß die Farbgebung und Strukturierung bei dem Köder einfach realisiert werden kann, insbesondere ein Bedrucken des Körpers 1 nicht notwendig ist, was bei dem Körper 1 aus dem thermoplastischen Elastomer nicht oder nur äußerst schwierig möglich wäre.

Als thermoplastisches Elastomer für die Herstellung des Körpers 1 eignen sich beispielsweise SEBS oder SBS. Die Verwendung auch anderer sehr weicher thermoplastischer Elastomere ist denkbar.

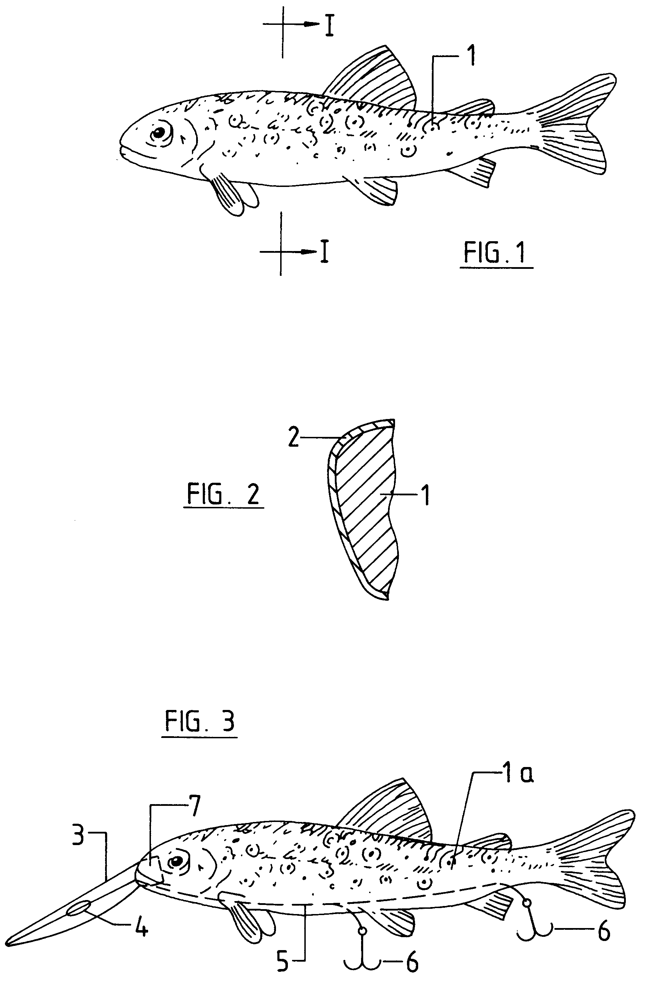

Die Figuren 3 - 6 beziehen sich auf einen Köder, der entsprechend dem Köder der Fig. 1 und 2 im wesentlichen aus einem als Fisch geformten bzw. gestalteten Körper 1a besteht und der als sogenannter "Wobbler" ausgeführt ist. Hierbei handelt es sich um einen Köder, der beim Einholen einer Angelleine, mit der der Köder verbunden ist, im Wasser taumelnde Bewegungen ausführt. Um dies zu erreichen, ist an dem aus dem weichen, thermoplastischen Elastomer hergestellten Körper 1a bzw. am dortigen Kopf eine Schaufel 3 vorgesehen, die über den Kopf des Köders vorsteht und eine Einhängöse 4 für die Angelleine bildet. Mit der Einhängöse sind über ein beispielsweise im Inneren des Körpers 1a verlaufendes Verbindungselement, z. B. eine Leine 5, an der Außenseite des Körpers 1a angeordnete Angelhaken 6 verbunden.

Bei der dargestellten Ausführungsform besitzt das Material, aus dem der Körper 1a hergestellt ist, eine Dichte von 0,95 oder weniger.

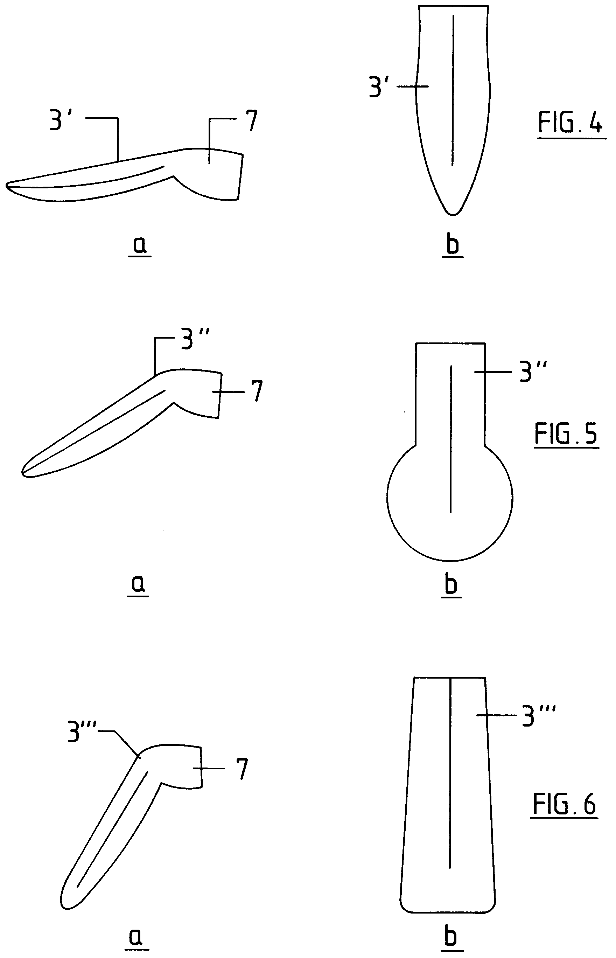

Die Schaufel 3 besteht aus einem härteren Material, beispielsweise aus einem harten Kunststoff, wobei die Schaufel 3 dem jeweiligen Einsatzbereich entsprechend sehr unterschiedlich geformt sein kann, wie dies in den Figuren 4 - 6 dargestellt ist. Die dortige Schaufelform 3' wird für ein in tieferen Gewässern eingesetzten Köder (Tiefläufer), die Schaufelform 3'' für einen in mittleren Gewässertiefen eingesetzten Köder (Mittelwasser-Köder) und die Schaufelform 3'' für einen im flachen Gewässer eingesetzten Köder (Flachwasser-Köder) verwendet.

Bei der Herstellung des Köders wird die jeweilige Schaufel 3 derart in das verwendete Formwerkzeug eingesetzt, daß diese Schaufel mit einem Abschnitt 7 in das Material des Körpers 1a eingebettet und dadurch am Kopf des Köders gehalten ist.

Bevorzugt erfolgt ansonsten die Herstellung des Körpers 1a in der gleichen Weise, wie dies für den Körper 1 bzw. für den von dem Körper 1 gebildeten Köder beschrieben wurde, d.h. bevorzugt ist auch der Körper 1a mit der Folie 2 oder dem entsprechenden Folienzuschnitt versehen. Weiterhin sind auch bei dem vom Körper 1a gebildeten Köder Geruchs- und/oder Geschmacksstoffe verwendet.

Bevorzugt ist der Köder nach den Figuren 3 - 6 aus geschäumtem thermoplastischem Elastomer hergestellt, wobei dem jeweiligen Anwendungszweck entsprechend unterschiedliche Dichten gewählt sind.

Der Köder nach den Figuren 3 - 6 hat weiterhin gegenüber herkömmlichen Wobblern den Vorteil, daß durch die Schaufel 3 im Wasser auch eine hin- und hergehende Schwanzbewegung erreicht wird, und zwar zusätzlich zu der taumelnden Bewegung des Köders. Bei entsprechend niedriger Dichte kann auch erreicht werden, daß der Köderfisch beim Einholen der Angelleine immer wieder selbsttätig langsam auftaucht.

### Aufstellung der verwendeten Bezugsziffern

- 1, 1a: Körper
- 2: Folie
- 3: Schaufel
- 4: Öse
- 5: Leine
- 6: Angelhaken
- 7: Abschnitt

## Patentansprüche

1. Köder zum Fischen, hergestellt als Formkörper aus Kunststoff, dadurch gekennzeichnet, daß der Kunststoff ein weiches thermoplastisches Elastomer (TPE) ist.

2. Köder nach Anspruch 1, dadurch gekennzeichnet, daß das thermoplastische Elastomer SEBS oder SBS ist.

3. Köder nach Anspruch 1 oder 2, dadurch gekennzeichnet, daß er aus einem Körper (1, 1a) aus dem thermoplastischen Elastomer und einem zumindest einen Teil der Außenfläche dieses Elastomers bildenden vorstrukturierten und vorbedruckten Zuschnitt einer Folie (2) aus Kunststoff besteht,
wobei vorzugsweise das Material der Folie (2) und das thermoplastische Elastomer des Körpers (1, 1a) so aufeinander abgestimmt sind, daß die Folie eine feste Verbindung mit dem Körper (1, 1a) eingeht.

4. Köder nach Anspruch 3, dadurch gekennzeichnet, daß der Körper (1) mit dem Zuschnitt der Folie (2) in einem "Inmold"-Verfahren hergestellt ist.

5. Köder nach einem der Ansprüche 1 bis 5, dadurch gekennzeichnet, daß dem Material des Köders und/oder der Folie (2) Geruchs-und/oder Geschmacksstoffe beigefügt sind.

6. Köder nach einem der Ansprüche 1 bis 5, dadurch gekennzeichnet, daß das spezifische Gewicht des Köders gegebenenfalls durch Aufschäumen des thermoplastischen Elastomers auf Werte deutlich unter 1,0 eingestellt ist.

7. Köder nach einem der Ansprüche 1 bis 8, gekennzeichnet durch seine Ausbildung als sogenannter Wobbler mit einer am Kopf des Körpers (1a) vorgesehenen und über den Kopf nach vorne wegstehenden Schaufel (3),
wobei vorzugsweise die Schaufel (3) aus einem im Vergleich zum Material des Körpers (1a) härteren Material, beispielsweise Kunststoff gefertigt ist.

8. Verfahren zu Herstellen eines Köders zum Fischen als Formkörper aus Kunststoff, dadurch gekennzeichnet, daß als Kunststoff ein weiches thermoplastisches Elastomer (TPE) in einem Spritzgußverfahren verwendet wird.

9. Verfahren nach Anspruch 8, dadurch gekennzeichnet, daß das thermoplastische Elastomer SEBS oder SBS ist.

10. Verfahren nach Anspruch 8 oder 9, dadurch gekennzeichnet, daß der Köder mit einem Körper (1, 1a) aus dem thermoplastischen Elastomer hergestellt wird, der (Körper) zumindest an einem Teil der Außenfläche mit einem vorstrukturierten und/oder vorbedruckten Zuschnitt einer Folie (2) aus Kunststoff versehen ist.

11. Verfahren nach Anspruch 10, dadurch gekennzeichnet, daß das Material der Folie (2) und das thermoplastische Elastomer des Körpers (1, 1a) so aufeinander abgestimmt werden, daß die Folie eine feste Verbindung mit dem Körper (1) eingeht,
wobei vorzugsweise der Körper (1, 1a) mit dem Zuschnitt der Folie (2) in einem "Inmold"-Verfahren hergestellt wird.

12. Verfahren nach einem der Ansprüche 8 bis 11, dadurch gekennzeichnet, daß dem Material des Köders und/oder der Folie (2) Geruchs-und/oder Geschmacksstoffe beigefügt werden.

13. Verfahren nach einem der Ansprüche 8 bis 12, dadurch gekennzeichnet, daß das spezifische Gewicht des Köders gegebenenfalls durch Aufschäumen des thermoplastischen Elastomers auf Werte deutlich unter 1,0 eingestellt wird.
